Europäisches Patentamt

European Patent Office

Office européen des brevets

(19)

(11) Numéro de publication : **0 578 558 A1**

# (12) DEMANDE DE BREVET EUROPEEN

(21) Numéro de dépôt : **93401747.6**

(22) Date de dépôt : **06.07.93**

(51) Int. Cl.$^5$ : **G06F 15/70, G06K 9/32**

(30) Priorité : **07.07.92 FR 9208385**

(43) Date de publication de la demande :
**12.01.94 Bulletin 94/02**

(84) Etats contractants désignés :
**DE GB IT**

(71) Demandeur : **THOMSON-CSF**
**51, Esplanade du Général de Gaulle**
**F-92800 Puteaux (FR)**

(72) Inventeur : **Vaillant, Regis**
**THOMSON-CSF, SCPI, BP 329**
**F-92402 Courbevoie Cedex (FR)**
Inventeur : **Monrocq, Christophe**
**THOMSON-CSF, SCPI, BP 329**
**F-92402 Courbevoie Cedex (FR)**
Inventeur : **Schmitt, Michel**
**THOMSON-CSF, SCPI, BP 329**
**F-92402 Courbevoie Cedex (FR)**

(74) Mandataire : **Guérin, Michel et al**
**THOMSON-CSF SCPI B.P. 329 50, rue**
**Jean-Pierre Timbaud**
**F-92402 Courbevoie Cédex (FR)**

(54) **Procédé d'identification d'objets dans une image.**

(57)    L'invention concerne un procédé d'identification d'objets dans une image dans lequel avec
un premier réseau de neurones (RZ1) on réalise
une localisation grossière d'objets dans l'image
ce qui fournit des hypothèses de localisation.
Ensuite, un deuxième réseau de neurones (RZ2)
réalise une localisation précise d'un objet dans
chaque hypothèse. Enfin, un troisième réseau
de neurones (RZ3) effectue une identification
de chaque objet dont on connaît avec précision
la position.
    Applications :
    — Localisation de visages
    — Télésurveillance
    — Mesure d'audience télévisuelle

FIG.1

EP 0 578 558 A1

L'invention concerne un procédé d'identification d'objets dans une image et plus particulièrement un procédé de reconnaissance et de localisation de formes d'objets, tels que des visages, dans une image pouvant représenter autre chose que ces objets.

Le domaine général est celui de l'analyse d'images, et plus particulièrement celui de la reconnaissance de formes. A titre d'exemple, dans ce qui va suivre on va détecter et identifier dans une image des formes correspondant à des visages de personnes et d'identifier les personnes observées en les comparant à un ensemble de personnes connues à l'avance. La localisation et la reconnaissance doivent être invariante par rapport à certaines transformations (translation, rotation, échelle, ...).

Il s'agit d'un problème spécifique qui s'inscrit dans la classe plus générale des problèmes de reconnaissance de formes dans une image. Ce type de problème est en général résolu par une des méthodes suivantes :

1. Extraction d'attributs morphologiques (coins, courbures, ...) suivis d'une reconnaissance par mise en correspondance avec des modèles de référence.

2. Calcul de courbes granulométriques par ouverture de laquelle on extrait des paramètres fournissant des informations symboliques sur les formes traitées, suivi d'un étage d'analyse de données.

3. Approximation polygonale de contours qui sont ensuite mis en correspondance avec un dictionnaire de référence.

4. Codage des contours qui donnent une courbe caractéristique telle que $\rho(\theta)$ ou $\theta(s)$.

5. Application directe d'un réseau de neurones sur l'image grossièrement pré- traitée.

Dans notre cas, contrairement à ces systèmes pour lesquels l'essentiel de l'information permettant la reconnaissance de l'objet se trouve contenue dans la forme de l'objet, l'information se trouve contenue dans la fonction d'intensité. L'analyse doit donc être effectuée sur l'ensemble de la forme et non pas sur le seul contour.

Il s'agit donc dans une image quelconque, d'identifier des zones de l'image correspondant à l'observation d'un visage et d'identifier la personne observée à partir d'une base d'images préalablement enregistrée.

L'objet de l'invention est d'obtenir un procédé simple et fournissant une réponse rapide.

L'invention concerne donc un procédé d'identification d'objets dans une image, caractérisé en ce qu'il comprend les étapes suivantes:

a) Acquisition d'imagettes représentant chacune une représentation possible des objets à détecter, les différentes imagettes étant toutes de même dimension et constitution d'une base d'apprentissage.

b) Etablissement d'un premier réseau de neurones.

c) Apprentissage du premier réseau de neurones de telle sorte que sa réponse fournisse :
- une valeur maximale (+ 1,3) lorsqu'une imagette est centrée sur un objet de l'image ;
- une valeur minimale (- 1,3) pour une absence de détection d'objet dans une image;
- une valeur intermédiaire entre la valeur maximale et la valeur minimale lorsqu'une imagette est décentrée par rapport à un objet de l'image ;

d) Balayage de l'image par le premier réseau de neurones, par portions d'images, pour détecter un ou plusieurs objets dans l'image et localisation des zones pour lesquelles les valeurs résultats du réseau de neurones sont supérieures à une valeur de seuil (0,8 par exemple) ce qui donne des zones hypothèses de présence d'objets à un taux déterminé d'agrandissement/réduction.

- réduction ou agrandissement de l'image à un premier taux déterminé et répétition de la phase précédente de balayage, et ainsi de suite à différents taux de réduction ou d'agrandissement.

Le procédé de l'invention est complété par le fait que le procédé comporte les étapes supplémentaires suivantes :

- établissement d'un deuxième réseau de neurones ;
- apprentissage de ce deuxième réseau de neurones de telle sorte que sa réponse se fasse à une valeur maximale (+ 1,3 par exemple)à pour une imagette centrée sur un objet ou à une valeur minimale (- 1?3 par exemple) pour une imagette décentrée ;
- balayage des zones d'hypothèses par le deuxième réseau de neurones pour détecter la réponse maximale pour chaque zone d'hypothèse.

Les imagettes étant des imagettes d'objets et de fonds, l'apprentissage du deuxième réseau de neurones se fait uniquement avec des imagettes d'objets, l'identification du fond de l'image n'étant plus utile.

Les différents objets et caractéristiques de l'invention apparaîtront plus clairement dans la description qui va suivre et dans les figures annexées qui représentent:
- la figure 1, un schéma général du système selon l'invention ;
- la figure 2, un exemple de réseau de neurones selon l'invention.

De façon générale, l'objet de l'invention consiste :
. A effectuer la localisation des visages en appliquant un filtre, qui est en fait un réseau de neurones, en chaque point de l'image. Les points-clés sont:
- L'image est traitée à différentes échelles pour résoudre le problème d'invariance par échelle.

- Le réseau de neurones est construit de sorte que son application à une image entière puisse être réalisée comme un ensemble de convolutions.
- L'apprentissage a été réalisé en utilisant plusieurs techniques de présentation de la base d'apprentissage.

. A effectuer la reconnaissance des visages en utilisant un filtre de neurones dont la couche d'entrée comprend plusieurs masques correspondant soit au visage global, soit à des zones signifiantes du visage.

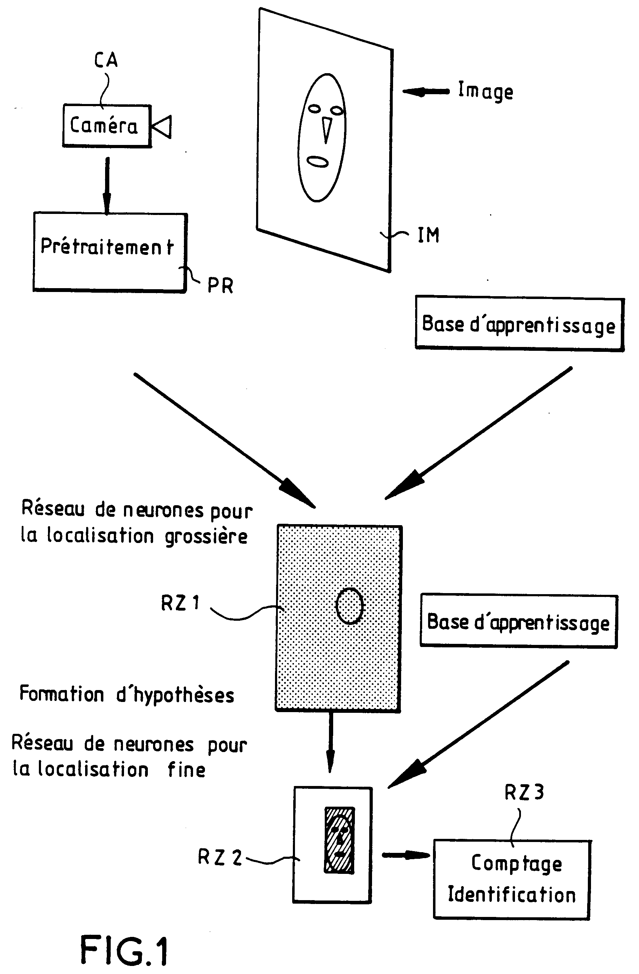

La figure 1 représente un schéma général du procédé de l'invention.

Une image IM est à explorer pour détecter dans cette image un ou plusieurs objets tels que des visages. Un appareil tel qu'une caméra CA enregistre cette image qui ensuite est soumise à un pré-traitement PR pour réaliser un lissage.

L'image est ensuite explorée par un réseau de neurones RZ1 qui a subi un apprentissage à l'aide d'une base d'imagettes de référence représentant des objets à segmenter par rapport au fond. Cette exploration permet d'identifier des zones fournissant une réponse supérieure à seuil déterminé, c'est-à-dire les zones susceptibles de contenir un objet à identifier.

Cette exploration permet la formation d'hypothèses et constitue donc une localisation grossière. On procède ensuite à une localisation fine en explorant, avec un deuxième réseau de neurones RZ2, les hypothèses identifiées précédemment et on détermine la réponse maximale de chaque zone. On obtient ainsi la position exacte de l'objet détecté.

Ensuite, un troisième réseau de neurones RZ3 identifie la représentation sensiblement exacte de l'objet en lui superposant ce troisième réseau de neurones.

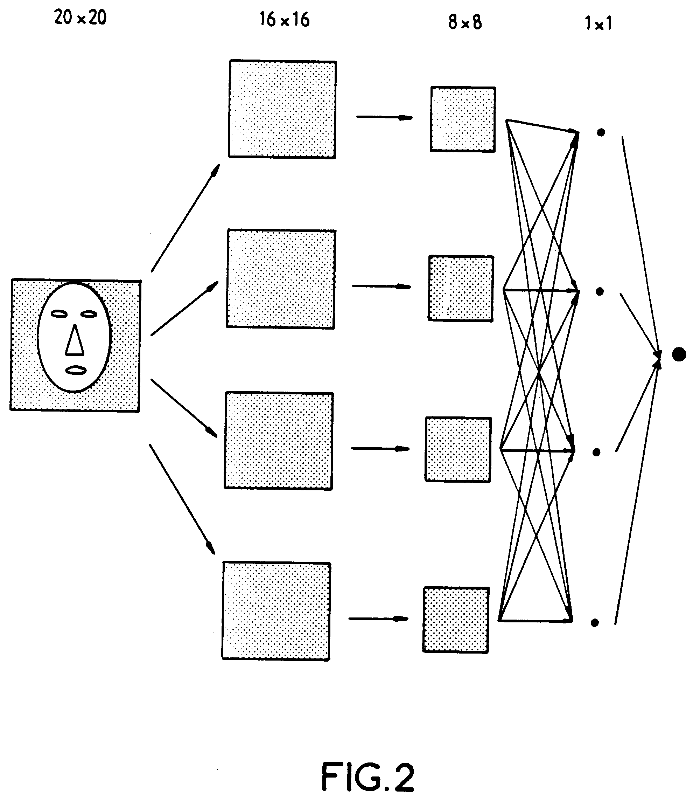

La figure 2 représente un réseau de neurones tel qu'utilisé dans le cadre de l'invention. Il s'agit d'un réseau à poids partagés qui comprime l'information en utilisant trois couches cachées. La couche de sortie comprend un seul neurone dont la valeur est + 1,3 si un visage est présent au point considéré de l'image et - 1,3 sinon.

Le fonctionnement du réseau de neurones est le suivant. Il est décomposé en couches que nous notons $C(l, m)$.

$C(0, 1)$ est la couche d'entrée de taille 20 x 20.

$C(1, k)$ k = 1 ... 4 correspond à la première couche cachée qui est décomposée en 4 imagettes de taille 16 x 16.

$C(2, k)$ k = 1 ... 4 correspond à la deuxième couche cachée qui est décomposée en 4 imagettes de taille 8 x8.

$C(3, k)$ k = 1 ... 4 correspond à la troisième couche cachée qui est formée de 4 neurones.

$C(4, 1)$ est la couche de sortie qui est formée d'un seul neurone.

Ces différentes couches sont connectées les unes avec les autres c'est-à-dire qu'en cours de fonctionnement les valeurs d'un neurone sont établies en fonction des valeurs des neurones avec lesquelles ce neurone est connecté. Les valeurs des neurones de la couche d'entrée sont bien sûr affectées en utilisant les pixels de l'image à analyser. Notons $N^{C(l,m)}(i,j)$ les valeurs du neurone $(i,j)$ de la couche $C(l,m)$.

$$N^{C(1,k)}(i,j) = f\left(W_0^{(1,k)} + \sum_{x=-2,y=-2}^{x=2,y=2} W_{(x+2,y+2)}^{(1,k)} N^{C(0,1)}(i+2-x, j+2-y)\right)$$

i=0... 15, j = 0... 15, k= 1...4

$$N^{C(2,k)}(i,j) = f\left(W_0^{(2,k)} + \sum_{x=0,y=0}^{x=1,y=1} W_{(x,y)}^{(2,k)} N^{C(1,k)}(2i+x, 2j+y)\right)$$

i=0...7, j=0...7, k=1...4

$$N^{C(3,k)}(0,0) = f\left(W_0^{(3,k)} + \sum_{x=0,y=0,l=1}^{x=7,y=7,l=4} W_{(x,y,l)}^{(3,k)} N^{C(2,k)}(x,y)\right)$$

k= 1...4

$$N^{C(4,1)}(0,0) = f(W_0^{(4,1)} + \sum_{i=1}^{i=4} W_{(i)}^{(4,1)} N^{C(3,i)}(0,0))$$

k= 1...4

Les coefficients $W_0^{(l,m)}$ et $W_{(x,y)}^{(l,m)}$ sont les poids du réseau. f est une fonction non-linéaire typiquement une sigmoïde. Pour la structure du réseau que nous utilisons il y en a 1157 différents par exemple.

La structure de réseau que nous venons de décrire a été particulièrement étudiée et tout spécialement les points suivants :

. Taille de la couche d'entrée : elle a été adaptée de sorte que la couche d'entrée ne soit pas trop grande pour que les temps de calcul restent raisonnables et ne soit pas trop petite pour que la présence d'un visage dans une image de cette taille puisse être perçue. Elle a été choisie carré pour que le système ait la possibilité d'être invariant par rotation.

. Utilisation de poids partagés : les couches ne sont pas totalement connectées mais simplement connectées en utilisant des masques de taille p x q qui sont partagés. Ceci a l'avantage de conserver un nombre de degrés de liberté suffisamment petit et que l'application du réseau de neurones a une image entière sera équivalent à un ensemble de convolutions.

Ce réseau de neurones est soumis à un apprentissage. L'apprentissage correspond à la détermination des poids du réseau. Elle est réalisée en utilisant l'algorithme classique de rétro-propagation du gradient. Le principe est le suivant : dans un premier temps, les poids sont initialisés aléatoirement. Ensuite des exemples choisis suivant des méthodes que nous détaillerons ci-dessous dans la base d'apprentissage sont présentés au réseau c'est-à-dire que la valeur des différents neurones est déterminée en considérant que les neurones de la couche d'entrée ont les valeurs fournies par l'exemple. $N^{C(4,1)}(0,0)$ est alors déterminée. La valeur désirée $D^{C(4,1)}(0,0)$ pour cet exemple est connue puisqu'il s'agit d'un exemple issu de la base d'apprentissage. La quantité $E(W) = (N^{C(4,1)}(0,0) - D^{C(4,1)}(0,0))^2$ est alors considérée comme une erreur à minimiser. Il s'agit d'une fonction des poids et il est donc possible de la minimiser en calculant $\frac{\partial E(W)}{\partial W}$ et en remplaçant les poids W par W - $\epsilon$ $\frac{\partial E(W)}{\partial W}$. Cette opération correspond à l'algorithme bien connu de descente de gradient.

L'apprentissage est particulièrement crucial. Des résultats corrects sont obtenus en effectuant une sélection des exemples dans la base d'apprentissage.

La base d'apprentissage a été établi ainsi :

. Une base de données de 1791 images chacune contenant l'image d'un visage a été constituée.

. Un filtre de lissage est appliqué à l'image.

. Les zones de l'image correspondant aux visages ont été extraites.

. Un ensemble d'images ne contenant pas de visages ont été acquises et 1791 imagettes en ont été extraites. Le même traitement que pour les imagettes correspondant aux visages a été appliqué. Nous appellerons ultérieurement ces imagettes, imagettes de fond.

Deux phases complémentaires d'apprentissage ont été mises en place:

1ère phase : apprentissage en vue de réaliser une localisation grossière.

Les imagettes de la base d'apprentissage sont présentées au réseau de neurones soit parfaitement centrées soit avec un décalage. Lorsque les imagettes correspondent à un visage parfaitement centré, la réponse désirée qui est indiquée au réseau de neurones est 1.3. Lorsqu'elles correspondent à des visages un peu décentrées, la réponse est inférieure à 1.3 et correspond à une exponentielle décroissante en fonction de l'importance du décentrage. Lorsque l'imagette correspond à un fond, la réponse indiquée est -1.3. Le but visé est d'entraîner le réseau à répondre un peu lorsqu'il rencontre un visage un peu décentré et à répondre de manière maximale lorsqu'il rencontre un visage parfaitement centré. Ainsi lors de l'application du réseau de neurones à une image entière, la réponse obtenue sera progressive tout autour du visage. Les zones correspondant à des visages seront donc assez faciles à détecter. L'inconvénient est que l'ensemble des poids ainsi obtenu ne peut pas donner précisément la position du centre du visage.

2ème phase : apprentissage en vue de réaliser une localisation fine.

Les imagettes de la base d'apprentissage sont présentées au réseau de neurones soit parfaitement centrées et la réponse désirée est 1.3, soit plus ou moins décentrées et la réponse désirée est -1.3. Les imagettes de fond ne sont pas présentées. Les poids ainsi obtenus forment un réseau capable de localiser précisément un visage lorsqu'ils observent des visages plus ou moins bien centrés. Il s'agit donc de l'outil nécessaire pour réaliser une localisation précise.

Dans les deux cas, la structure du réseau est la même.

Au cours de l'apprentissage, des imagettes correspondant à des rotations des imagettes normales sont aussi présentées au réseau. Le but recherché est de rendre le réseau insensible à l'orientation du visage observé dans l'image.

Ensuite, pour analyser une image, le réseau est utilisé en l'appliquant à une image entière ou plus précisément à l'ensemble des images qu'il est possible de former avec l'image acquises en la sous-échantillonnant avec une dizaine de facteurs d'échelle entiers.

L'application demande donc les étapes suivantes :

. Acquisition d'une image qui est lissée et sous-échantillonnée. Il en résulte une dizaine d'images présentant des résolutions différentes (ou des taux de réduction/agrandissement différents).

. Application du premier réseau de neurones à chacune des images. Le résultat est un ensemble d'images correspondant à la réponse du réseau de neurones. Dans ces images, les zones pour lesquelles la réponse dépasse un certain seuil (0,8 par exemple) sont détectées et extraites. Elles forment un premier ensemble d'hypothèses.

. Les zones qui ont été déterminées à l'étape précédente sont présentées au deuxième réseau de neurones. Tous les points pour lesquels la réponse obtenue dépasse un certain seuil sont considérés comme des hypothèses de visage et la zone correspondante dans l'image initiale est déterminée en tenant compte du facteur d'échantillonnage.

. L'ensemble des hypothèses formées est considéré et un sous-ensemble en est extrait de sorte que les différentes zones qui leur correspondent ne s'intersectent pas.

Pour la reconnaissance de visage, on utilise aussi un réseau à poids partagés qui comprime l'information en utilisant plusieurs couches cachées. La couche de sortie comprend p neurones. p est le nombre de personnes distinctes présentes dans la base de données. La couche d'entrée est formée de plusieurs imagettes qui correspondent soit au visage dans son entier soit à des parties de visage.

La phase d'apprentissage est réalisée en utilisant la même base de données que pour la localisation. Cette base comprend 28 personnes différentes par exemple.

Le pré-traitement des images inclut l'utilisation d'un filtre de lissage et une étape de normalisation qui rend l'image observée indépendante de la position et de l'étendue des sources lumineuses.

Le réseau de neurones est appliqué sur les zones de l'image pour lesquelles un visage a été détecté. Le neurone de sortie pour lequel la réponse est maximale est déclaré correspondre à la personne reconnue.

L'invention prévoit ensuite lorsqu'un visage a été localisé, de lui appliquer un troisième réseau de neurones ayant subi un apprentissage avec des visages typés en vue d'identifier ce visage.

La description qui précède a été faite dans le cadre de la reconnaissance de visages. Cependant, le système applicable à la reconnaissance de tout objet.

De même, il n'a pas été précisé si l'image à analyser est constituée de pixels (éléments images) ou s'il s'agit d'une image analogique. Le système est applicable à tout type d'images.

## Revendications

1. Procédé d'identification d'objets dans une image, caractérisé en ce qu'il comprend les étapes suivantes :
   a) Acquisition d'imagettes représentant chacune une représentation possible des objets à détecter, les différentes imagettes étant toutes de même dimension et constitution d'une base d'apprentissage.
   b) Etablissement d'un premier réseau de neurones.
   c) Apprentissage du premier réseau de neurones de telle sorte que sa réponse fournisse :
      - une valeur maximale (+ 1,3) lorsqu'une imagette est centrée sur un objet de l'image ;
      - une valeur minimale (- 1,3) pour une absence de détection d'objet dans une image;
      - une valeur intermédiaire entre la valeur maximale et la valeur minimale lorsqu'une imagette est décentrée par rapport à un objet de l'image ;
   d) Balayage de l'image par le premier réseau de neurones, par portions d'images, pour détecter un ou plusieurs objets dans l'image et localisation des zones pour lesquelles les valeurs résultats du réseau de neurones sont supérieures à une valeur de seuil (0,8 par exemple) ce qui donne des zones hypothèses de présence d'objets à des taux déterminés d'agrandissement/réduction.
      - réduction ou agrandissement de l'image à un premier taux déterminé et répétition de la phase précédente de balayage, et ainsi de suite à différents taux de réduction ou d'agrandissement.

2. Procédé selon la revendication 1, caractérisé en ce qu'il comporte les étapes supplémentaires suivantes :
   - établissement d'un deuxième réseau de neurones;

- apprentissage de ce deuxième réseau de neurones de telle sorte que sa réponse se fasse à une valeur supérieure à une valeur maximale (+ 1,3 par exemple) pour une imagette centrée sur un objet, ou une valeur minimale (- 1,3 par exemple) pour une imagette décentrée ;
- balayage des zones d'hypothèses par le deuxième réseau de neurones pour détecter au moins une réponse maximale pour chaque zone d'hypothèse.

3. Procédé selon la revendication 1, caractérisé en ce que la localisation des zones pour lesquelles les valeurs de résultats du réseau de neurones sont supérieures à une valeur de seuil se fait pour des zones de taille minimale.

4. Procédé selon la revendication 2, caractérisé en ce que le balayage de chaque zone d'hypothèse se fait à un taux d'agrandissement/réduction correspondant à la localisation des zones d'hypothèses ayant fourni le résultat maximum.

5. Procédé selon la revendication 1, caractérisé en ce que les images ainsi que les imagettes sont composées de pixels.

6. Procédé selon la revendication 2, caractérisé en ce que la réduction ou l'agrandissement de l'image se fait par changement de résolution de l'image.

7. Procédé selon la revendication 1, caractérisé en ce que chaque imagette est de forme carrée.

8. Procédé selon la revendication 1, caractérisé en ce que les objets à détecter sont des visages.

9. Procédé selon la revendication 1, caractérisé en ce que la phase d'acquisition d'imagettes prévoit également l'acquisition de représentation de fonds d'images permettant au procédé d'identifier des absences d'objets.

10. Procédé selon la revendication 2, caractérisé en ce qu'il comporte une étape supplémentaire permettant d'identifier avec un troisième réseau de neurones les objets ayant été localisés.

11. Procédé selon la revendication 2, caractérisé en ce que les imagettes comportent des imagettes d'objets et les imagettes de fonds et en ce que l'apprentissage du deuxième réseau de neurones ne se fait uniquement qu'avec des imagettes d'objets.

CA

Caméra

Prétraitement
PR

Image

IM

Base d'apprentissage

Réseau de neurones pour
la localisation grossière

RZ 1

Base d'apprentissage

Formation d'hypothèses

Réseau de neurones pour
la localisation fine

RZ 2

RZ 3

Comptage
Identification

# FIG.1

20 × 20        16 × 16        8 × 8        1 × 1

FIG.2

**Office européen des brevets**

## RAPPORT DE RECHERCHE EUROPEENNE

Numero de la demande

EP    93 40 1747

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FIRST IEE INTERNATIONAL CONFERENCE ON ARTIFICIAL NEURAL NETWORKS ,16-18 OCTOBER 1989;IEE PRESS ;LONDON pages 201 - 205 R.A. HUTCHINSON ET AL. 'comparison of neural networks and conventional techniques for feature location in facial images' * page 201, colonne de droite, ligne 45 - page 202, colonne de gauche, ligne 55; figures 1,4 * | 1-11 | G06F15/70 G06K9/32 |
| A | US-A-4 958 939 (TARID SAMAD) * abrégé * * colonne 1, ligne 65 - colonne 2, ligne 47; figures 1,3,4 * | 1 | |
| | | | **DOMAINES TECHNIQUES RECHERCHES (Int. Cl.5)** G06F G06K |

Le présent rapport a été établi pour toutes les revendications

| Lieu de la recherche | Date d'achèvement de la recherche | Examinateur |
|---|---|---|
| LA HAYE | 12 OCTOBRE 1993 | CHATEAU J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)